# EUROPEAN PATENT APPLICATION

(11) **EP 3 352 265 A1**
(43) Date of publication of application: **25.07.2018**
(21) Application number: 16846510.2
(22) Date of filing: 14.09.2016
(51) Int. Cl.: H01M 4/62, H01M 4/1391, H01M 4/1397, H01M 4/505, H01M 4/525, H01M 4/58, H01M 10/052

(54) **POSITIVE ELECTRODE MATERIAL FOR NONAQUEOUS ELECTROLYTE SECONDARY BATTERY**

(30) Priority: 14.09.2015 JP 2015180359
(71) Applicant: Osaka Soda Co., Ltd., Osaka-shi, Osaka 550-0011 (JP)
(72) Inventor: TAKAHASHI, Kazuhiro, Osaka-shi Osaka 550-0011 (JP); NAKAMURA, Miwa, Osaka-shi Osaka 550-0011 (JP); MATSUO, Takashi, Osaka-shi Osaka 550-0011 (JP); UEDA, Hideaki, Osaka-shi Osaka 550-0011 (JP)
(74) Representative: Müller-Boré & Partner Patentanwälte PartG mbB
(86) International application number: PCT/JP2016/077109
(87) International publication number: WO 2017/047639

(57) **Abstract**

There is provided a cathode material that can effectively reduce the internal resistance of a nonaqueous electrolyte secondary battery, and effectively improve the charge-discharge cycle characteristics of the nonaqueous electrolyte secondary battery. The cathode material is a cathode material for a nonaqueous electrolyte secondary battery comprising a cathode active material, a binder, and a water-soluble antioxidant.

## Description

### Technical Field

The present invention relates to a cathode material for a nonaqueous electrolyte secondary battery. More particularly, the present invention relates to a cathode material for a nonaqueous electrolyte secondary battery that can effectively reduce the internal resistance of a nonaqueous electrolyte secondary battery, and effectively improve the charge-discharge cycle characteristics of the nonaqueous electrolyte secondary battery, a cathode comprising the cathode material, and a nonaqueous electrolyte secondary battery comprising the cathode.

### Background Art

Nonaqueous electrolyte secondary batteries such as lithium-ion secondary batteries have high energy densities and high voltages, and thus, are widely used for electronic apparatuses such as mobile phones, laptop computers, and camcorders. In recent years, the growing awareness of environmental protection and the enactment of related laws have pushed forward the application of these nonaqueous electrolyte secondary batteries to storage batteries for use in electric vehicles, hybrid electric vehicles, and other vehicles, or for storing household electric power. For all these uses, the batteries desirably have high energy densities, in consideration of the occupied volume, the mass, and the like of the battery.

Typically, in a lithium-ion secondary battery, lithium cobalt oxide is used for a cathode, and a carbon material is used for an anode. The lithium-ion secondary battery is used at a maximum operating voltage of 4.2 V, which is determined in consideration of a balance between the energy density and the durability of battery components.

In the lithium-ion secondary battery, a charging voltage over 4 V may cause deterioration of the electrolytic solution and other organic components. Such deterioration tends to be accelerated as the temperature during use increases. The deterioration of the electrolytic solution is due to a strong oxidizing effect of the cathode. To prevent this oxidizing effect, the addition of an antioxidant into the electrolytic solution or electrode has been contemplated (see, for example, Patent Literatures 1 to 3).

### Citation List

### Patent Literature

Patent Literature 1: JP 2001-338684 A
Patent Literature 2: JP H11-67211 A
Patent Literature 3: JP 2006-209995 A

### Summary of Invention

### Technical Problem

However, as a result of research conducted by the inventors of the present invention, the inventors found that in the batteries disclosed in Patent Literatures 1 to 3, after repeated charging and discharging, the antioxidant is dissolved or eluted in the electrolytic solution, and is thereby deactivated, resulting in a failure to sustain the anti-oxidizing effect.

Furthermore, when the temperature of the lithium-ion secondary battery during use increases, the oxidizing atmosphere becomes stronger particularly near the surface of the cathode, where the oxidative decomposition of organic materials becomes more likely to occur. This increases the internal resistance of the battery, and in particular, degrades the charge-discharge cycle characteristics of the battery. For example, in order to maintain a high capacity at a charging voltage of 4 V or more, and improve the charge-discharge cycle characteristics, it is necessary to inhibit the strong oxidizing effect in the cathode.

In view of the foregoing circumstances, it is a main object of the present invention to provide a cathode material for a nonaqueous electrolyte secondary battery that can effectively reduce the internal resistance of the nonaqueous electrolyte secondary battery, and effectively improve the charge-discharge cycle characteristics of the nonaqueous electrolyte secondary battery. It is another object of the present invention to provide a cathode comprising the cathode material and a nonaqueous electrolyte secondary battery comprising the cathode.

### Solution to Problem

The inventors of the present invention conducted extensive research to solve the aforementioned problem. As a result, the inventors found that a cathode material for a nonaqueous electrolyte secondary battery comprising a cathode active material, a binder, and a water-soluble antioxidant effectively reduces the internal resistance of the nonaqueous electrolyte secondary battery, and effectively improves the charge-discharge cycle characteristics of the nonaqueous electrolyte secondary battery. The present invention was completed as a result of further research based on these findings.

In summary, the present invention provides aspects of invention as itemized below.
Item 1. A cathode material for a nonaqueous electrolyte secondary battery comprising a cathode active material, a binder, and a water-soluble antioxidant.
Item 2. The cathode material according to item 1, wherein the water-soluble antioxidant is at least one selected from the group consisting of ascorbic acid and/or salts thereof, erythorbic acid and/or salts thereof, green tea polyphenols, glutathione, lipoic acid, tea extract, and rosemary extract.
Item 3. The cathode material according to item 1 or 2, wherein the binder is an aqueous binder.
Item 4. The cathode material according to any one of items 1 to 3, wherein the water-soluble antioxidant is contained in an amount of 0.1 to 50 parts by mass, per 100 parts by mass of the binder.
Item 5. The cathode material according to any one of items 1 to 4, wherein the cathode active material comprises an alkali metal-containing composite oxide represented by any of the compositions:
   AMO₂, wherein A represents an alkali metal, and M comprises a single transition metal or two or more transition metals, and optionally partially comprises a non-transition metal;
   AM₂O₄, wherein A represents an alkali metal, and M comprises a single transition metal or two or more transition metals, and optionally partially comprises a non-transition metal;
   A₂MO₃, wherein A represents an alkali metal, and M comprises a single transition metal or two or more transition metals, and optionally partially comprises a non-transition metal; and
   AMBO₄, wherein A represents an alkali metal, B represents P, Si, or a mixture thereof, and M comprises a single transition metal or two or more transition metals, and optionally partially comprises a non-transition metal.
Item 6. A cathode for a nonaqueous electrolyte secondary battery comprising the cathode material according to any one of items 1 to 5 and a cathode current collector.
Item 7. A method for producing a cathode for a nonaqueous electrolyte secondary battery comprising the step of applying the cathode material according to any one of items 1 to 5 to a surface of a cathode current collector.
Item 8. A nonaqueous electrolyte secondary battery comprising the cathode according to item 6, an anode, and an organic electrolytic solution.

### Advantageous Effects of Invention

According to the present invention, because the cathode material for a nonaqueous electrolyte secondary battery comprises a cathode active material, a binder, and a water-soluble antioxidant, it can effectively reduce the internal resistance of a nonaqueous electrolyte secondary battery, and effectively improve the charge-discharge cycle characteristics of the nonaqueous electrolyte secondary battery. That is, a nonaqueous electrolyte secondary battery according to the present invention, in which the cathode material is used as a cathode, has low internal resistance and excellent charge-discharge cycle characteristics.

### Description of Embodiments

### 1. Cathode Material

The cathode material of the present invention is a cathode material for use as a cathode of a nonaqueous electrolyte secondary battery, the cathode material comprising a cathode active material, a binder, and a water-soluble antioxidant. The cathode material of the present invention will be hereinafter described in detail.

The cathode active material contained in the cathode material of the present invention is not particularly limited, and a known cathode active material used for a cathode of a nonaqueous electrolyte secondary battery may be used. The cathode active material preferably comprises an alkali metal-containing composite oxide represented by, for example, the composition: AMO₂, AM₂O₄, A₂MO₃, or AMBO₄. In these compositions, A represents an alkali metal; M comprises a single transition metal or two or more transition metals, and optionally partially comprises a non-transition metal; and B represents P, Si, or a mixture thereof. The cathode active material is preferably in the form of a powder. The particle diameter of the powder is preferably 50 µm or less, and more preferably 20 µm or less, for example. The cathode active material preferably has an electromotive force of 3 V (vs. Li/Li+) or more.

Preferred examples of the cathode active material specifically include lithium-containing composite oxides such as LiₓCoO₂, LiₓNiO₂, LiₓMnO₂, LiₓCrO₂, LiₓFeO₂, LiₓCoₐMn₁₋ₐO₂, LiₓCoaNi₁₋ₐO₂, LiₓCoₐCr₁₋ₐO₂, LiₓCoₐFe₁₋ₐO₂, LiₓCoₐTi₁₋ₐO₂, LiₓMnₐNi₁₋ₐO₂, LiₓMnₐCr₁₋ₐO₂, LiₓMnₐFe₁₋ₐO₂, LiₓMnaTi₁₋ₐO₂, LiₓNiₐCr₁₋ₐO₂, LiₓNiₐFe₁₋ₐO₂, LiₓNiₐTi₁₋ₐO₂, LiₓCrₐFe₁₋ₐO₂, LiₓCrₐTi₁₋ₐO₂, LiₓFeₐTi₁₋ₐO₂, LiₓCo_{b}Mn_{c}Ni_{1-b-c}O₂, LiₓCr_{b}Mn_{c}Ni_{1-b-c}O₂, LiₓFe_{b}Mn_{c}Ni_{1-b-c}O₂, LiₓTi_{b}Mn_{c}Ni_{1-b-c}O₂, LiₓMn₂O₄, LiₓMn_{d}Co_{2-d}O₄, LiₓMn_{d}Ni_{2-d}O₄, LiₓMn_{d}Cr_{2-d}O₄, LiₓMn_{d}Fe_{2-d}O₄, LiₓMn_{d}Ti_{2-d}O₄, Li_{y}MnO₃, Li_{y}MnₑCo₁₋ₑO₃, Li_{y}MnₑNi₁₋ₑO₃, Li_{y}MnₑFe₁₋ₑO₃, Li_{y}MnₑTi₁₋ₑO₃, LiₓCoPO₄, LiₓMnPO₄, LiₓNiPO₄, LiₓFePO₄, LiₓCo_{f}Mn_{1-f}PO₄, LiₓCo_{f}Ni_{1-f}PO₄, LiₓCo_{f}Fe_{1-f}PO₄, LiₓMn_{f}Ni_{1-f}PO₄, LiₓMn_{f}Fe_{1-f}PO₄, LiₓNi_{f}Fe_{1-f}PO₄, Li_{y}CoSiO₄, Li_{y}MnSiO₄, Li_{y}NiSiO₄, Li_{y}FeSiO₄, Li_{y}Co_{g}Mn_{1-g}SiO₄, Li_{y}Co_{g}Ni_{1-g}SiO₄, Li_{y}Co_{g}Fe_{1-g}SiO₄, Li_{y}Mn_{g}Ni_{1-g}SiO₄, Li_{y}Mn_{g}Fe_{1-g}SiO₄, Li_{y}Ni_{g}Fe_{1-g}SiO₄, Li_{y}CoPₕSi₁₋ₕO₄, Li_{y}MnPₕSi₁₋ₕO₄, Li_{y}NiPₕSi₁₋ₕO₄, Li_{y}FePₕSi₁₋ₕO₄, Li_{y}Co_{g}Mn_{1-g}PₕSi₁₋ₕO₄, Li_{y}Co_{g}Ni_{1-g}PₕSi₁₋ₕO₄, Li_{y}Co_{g}Fe_{1-g}PₕSi₁₋ₕO₄, Li_{y}Mn_{g}Ni_{1-g}PₕSi₁₋ₕO₄, Li_{y}Mn_{g}Fe_{1-g}PhSi₁₋ₕO₄, and Li_{y}Ni_{g}Fe_{1-g}PₕSi₁₋ₕO₄; wherein x = 0.01 to 1.2, y = 0.01 to 2.2, a = 0.01 to 0.99, b = 0.01 to 0.98, and c = 0.01 to 0.98; with the proviso that b + c = 0.02 to 0.99, d = 1.49 to 1.99, e = 0.01 to 0.99, f = 0.01 to 0.99, g = 0.01 to 0.99, and h = 0.01 to 0.99.

More preferred examples of the cathode active material specifically include LiₓCoO₂, LiₓNiO₂, LiₓMnO₂, LiₓCrO₂, LiₓCOₐNi₁₋ₐO₂, LiₓMnₐNi₁₋ₐO₂, LiₓCo_{b}Mn_{c}Ni_{1-b-c}O₂, LiₓMn₂O₄, Li_{y}MnO₃, Li_{y}MneFe₁₋ₑO₃, Li_{y}MnₑTi₁₋ₑO₃, LiₓCoPO₄, LiₓMnPO₄, LiₓNiPO₄, LiₓFePO₄, and LiₓMn_{f}Fe_{1-f}PO₄; wherein x = 0.01 to 1.2, y = 0.01 to 2.2, a = 0.01 to 0.99, b = 0.01 to 0.98, and c = 0.01 to 0.98; with the proviso that b + c = 0.02 to 0.99, d = 1.49 to 1.99, e = 0.01 to 0.99, and f = 0.01 to 0.99. The values of x and y increase or decrease with charging or discharging.

The content of the cathode active material in the cathode material is, for example, about 99.9 to 50% by mass, more preferably about 99.5 to 70% by mass, and still more preferably about 99 to 85% by mass, although not particularly limited thereto. The above-described cathode active materials may be used alone or in combination of two or more.

The binder contained in the cathode material of the present invention is not particularly limited, and a known binder used for a cathode of a nonaqueous electrolyte secondary battery may be used. The binder may be, for example, one or more compounds selected from a homopolymer or a copolymer of at least one monomer selected from vinylidene fluoride, tetrafluoroethylene, hexafluoropropylene, and trifluoroethylene, a styrene-butadiene copolymer, an acrylic polymer, and a vinyl polymer. Among the above, a vinylidene fluoride polymer, a tetrafluoroethylene polymer, and an acrylic polymer are preferred.

The amount of the binder contained in the cathode material is, for example, preferably 7 parts by mass or less, and more preferably 5 parts by mass or less, per 100 parts by mass of the cathode active material, although not particularly limited thereto. The lower limit for the amount of the binder is typically 0.05 part by mass or more, 0.1 part by mass or more, 0.2 part by mass or more, 0.5 part by mass or more, or 1 part by mass or more, for example.

In the present invention, an aqueous binder is preferably used as the binder. For example, when an aqueous acrylic polymer is used as the binder in the cathode material of the present invention, the addition of the below-described water-soluble antioxidant to a binder solution (latex solution) has a synergistic effect of improving the preservation stability of the binder. Thus, the binder for the cathode material of the present invention comprising the below-described water-soluble antioxidant is preferably an aqueous binder, and particularly preferably an aqueous acrylic polymer binder. As used herein, the "aqueous binder" refers to a binder that is dispersed in a solvent such as water or an alcohol when in use.

In the production of the cathode material of the present invention, when an acrylic copolymer is used as an aqueous binder, an aqueous emulsion of the acrylic copolymer may be used as a source of the aqueous binder. The aqueous emulsion of the acrylic copolymer may be, for example, an aqueous emulsion of an acrylic copolymer comprising the following structural units (A) to (C) (i.e., a copolymer of the following structural units (A) to (C) as monomers).

The structural unit (A) is a structural unit represented by general formula (1) shown below, which is derived from a hydroxyl group-containing (meth)acrylate monomer. The structural unit (B) is a structural unit derived from an ethylenically unsaturated monomer having at least one functional group. The structural unit (C) is a structural unit derived from a polyfunctional (meth)acrylate monomer having a functionality of 5 or less.

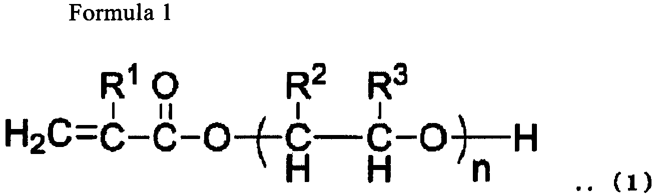

In the monomer of the structural unit (A) represented by general formula (1), R¹ is a hydrogen atom or a C₁₋₄ linear or branched alkyl group; R² and R³ are each a hydrogen atom or a C₁₋₄ linear or branched alkyl group; and n is an integer from 2 to 30.

The hydroxyl group-containing (meth)acrylate monomer represented by general formula (1) is preferably an alkylene glycol mono(meth)acrylate having a molecular weight of 150 to 1000. Specific examples of such alkylene glycol mono(meth)acrylates include diethylene glycol mono(meth)acrylate, triethylene glycol mono(meth)acrylate, tetraethylene glycol mono(meth)acrylate, polyethylene glycol mono(meth)acrylate, dipropylene glycol mono(meth)acrylate, tripropylene glycol mono(meth)acrylate, tetrapropylene glycol mono(meth)acrylate, and polypropylene glycol mono(meth)acrylate. These alkylene glycol mono(meth)acrylates may be used alone or in combination of two or more. Among the above, tetraethylene glycol mono(meth)acrylate, polyethylene glycol mono(meth)acrylate, tetrapropylene glycol mono(meth)acrylate, and polypropylene glycol mono(meth)acrylate are preferred. As used herein, the "(meth)acrylate" refers to "acrylate" or "methacrylate". The same applies to similar expressions.

In the structural unit (B), specific examples of the functional group include a nitrile group, a carboxylic acid group, a ketone group, an organic acid vinyl ester group, and a vinyl alcohol group. That is, examples of the monomer of the structural unit (B) include a nitrile group-containing ethylenically unsaturated monomer, a carboxylic acid group-containing ethylenically unsaturated monomer, a ketone group-containing ethylenically unsaturated monomer, and an organic acid vinyl ester group-containing ethylenically unsaturated monomer. Moreover, in the structural unit (B), a vinyl alcohol group-containing structural unit may be obtained by saponifying a polymer of an organic acid vinyl ester monomer with an alkali.

The nitrile group-containing ethylenically unsaturated monomer is not particularly limited so long as it contains a nitrile group; preferably, α,β-unsaturated nitrile monomers such as acrylonitrile, methacrylonitrile, α-chloroacrylonitrile, crotononitrile, α-ethylacrylonitrile, α-cyanoacrylate, vinylidene cyanide, and fumaronitrile are used. More preferably, acrylonitrile and methacrylonitrile are used. These nitrile group-containing ethylenically unsaturated monomers may be used alone or in combination of two or more.

Specific examples of the carboxylic acid group-containing ethylenically unsaturated monomer include monofunctional monomers such as methacrylic acid and acrylic acid; and bifunctional monomers such as fumaric acid, maleic acid, itaconic acid, citraconic acid, mesaconic acid, glutaconic acid, 1,2,3,6-tetrahydrophthalic acid, 3-methyl-1,2,3,6-tetrahydrophthalic acid, 4-methyl-1,2,3,6-tetrahydrophthalic acid, methyl-3,6-endomethylene-1,2,3,6-tetrahydrophthalic acid, exo-3,6-epoxy-1,2,3,6-tetrahydrophthalic acid, and himic acid. Moreover, as a bifunctional carboxylic acid group-containing ethylenically unsaturated monomer, an anhydride of an unsaturated carboxylic acid, for example, maleic anhydride, may be used. Such an anhydride may also be saponified. The carboxylic acid group-containing ethylenically unsaturated monomer is preferably methacrylic acid, acrylic acid, fumaric acid, maleic acid, or itaconic acid. More preferably, the carboxylic acid group-containing ethylenically unsaturated monomer is methacrylic acid, acrylic acid, or itaconic acid. These carboxylic acid group-containing ethylenically unsaturated monomers may be used alone or in combination of two or more.

Specific examples of the ketone group-containing ethylenically unsaturated monomer include vinyl ketones such as methyl vinyl ketone, ethyl vinyl ketone, isopropyl vinyl ketone, isobutyl vinyl ketone, t-butyl vinyl ketone, and hexyl vinyl ketone. These ketone group-containing ethylenically unsaturated monomers may be used alone or in combination of two or more.

Specific examples of the organic acid vinyl ester group-containing ethylenically unsaturated monomer include vinyl acetate, vinyl propionate, vinyl butyrate, vinyl trimethyl acetate, vinyl caproate, vinyl caprylate, vinyl laurate, vinyl palmitate, and vinyl stearate. These organic acid vinyl ester group-containing ethylenically unsaturated monomers may be used alone or in combination of two or more. Among the above, vinyl acetate and vinyl propionate are preferred.

As described above, in the structural unit (B), a vinyl alcohol group-containing structural unit may be obtained by saponifying a polymer of an organic acid vinyl ester monomer with an alkali.

The proportion of the structural unit (B) is, for example, preferably about 5 to 500 parts by mass, and more preferably about 5 to 300 parts by mass, per 100 parts by mass of the structural unit (A), although not particularly limited thereto.

When the structural unit (B) is a vinyl alcohol group-containing structural unit, the amount of the vinyl alcohol group-containing structural unit is preferably about 10 to 300 parts by mass, more preferably about 10 to 250 parts by mass, and still more preferably 15 to 250 parts by mass, per 100 parts by mass of the structural unit (A) of the hydroxyl group-containing (meth)acrylate monomer.

The monomer of the structural unit (B) is most preferably a carboxylic acid group-containing monomer in view of battery characteristics and adhesion to the current collector. The carboxylic acid group-containing monomer is particularly preferably acrylic acid, methacrylic acid, fumaric acid, maleic acid, or itaconic acid.

The polyfunctional (meth)acrylate monomer having a functionality of 5 or less of the structural unit (C) serves as a cross-linking agent. Examples of the polyfunctional (meth)acrylate monomer include bifunctional to pentafunctional (meth)acrylates. A bifunctional to pentafunctional cross-linking agent has good dispersibility in emulsion polymerization, and has excellent properties (bending properties and binding properties) as a binder. The polyfunctional (meth)acrylate monomer is preferably a trifunctional or tetrafunctional (meth)acrylate.

Specific examples of bifunctional (meth)acrylate monomers include triethylene glycol di(meth)acrylate, tetraethylene glycol di(meth)acrylate, polyethylene glycol di(meth)acrylate, tripropylene glycol di(meth)acrylate, tetrapropylene glycol di(meth)acrylate, polypropylene glycol di(meth)acrylate, polytetramethylene glycol di(meth)acrylate, dioxane glycol di(meth)acrylate, and bis(meth)acryloyloxyethyl phosphate.

Specific examples of trifunctional (meth)acrylate monomers include trimethylolpropane tri(meth)acrylate, trimethylolpropane EO-modified tri(meth)acrylate, trimethylolpropane PO-modified tri(meth)acrylate, pentaerythritol tri(meth)acrylate, 2,2,2-tris(meth)acryloyloxy methyl ethyl succinate, ethoxylated isocyanuric acid tri(meth)acrylate, ε-caprolactone-modified tris-(2-(meth)acryloxy ethyl)isocyanurate, glycerol EO-modified tri(meth)acrylate, glycerol PO-modified tri(meth)acrylate, and tris(meth)acryloyloxyethyl phosphate. Among the above, trimethylolpropane tri(meth)acrylate, trimethylolpropane EO-modified tri(meth)acrylate, and pentaerythritol tri(meth)acrylate are preferred.

Specific examples of tetrafunctional (meth)acrylate monomers include ditrimethylolpropane tetra(meth)acrylate, pentaerythritol tetra(meth)acrylate, and pentaerythritol EO-modified tetra(meth)acrylate.

Specific examples of pentafunctional (meth)acrylate monomers include dipentaerythritol penta(meth)acrylate.

In the structural unit (C), the above-described polyfunctional (meth)acrylate monomers may be used alone or in combination of two or more.

The proportion of the structural unit (C) is, for example, preferably about 0.1 to 500 parts by mass, more preferably about 0.5 to 450 parts by mass, and still more preferably 1 to 400 parts by mass, per 100 parts by mass of the structural unit (A), although not particularly limited thereto.

In the acrylic copolymer, the mass ratio of the structural units (A), (B), and (C) is preferably 10-90:3-70:0.5-90, more preferably 13-80:4-50:1-70, and still more preferably 20-70:5-40:5-65.

Moreover, when the copolymer contains the structural units (A), (B), and (C), the contents of these structural units in the copolymer are preferably as follows:
With regard to the content of the structural unit (A), the lower limit is preferably 10% by mass or more, more preferably 13% by mass or more, and still more preferably 20% by mass or more; and the upper limit is preferably 90% by mass or less, more preferably 80% by mass or less, and still more preferably 70% by mass or less.
With regard to the content of the structural unit (B), the lower limit is preferably 3% by mass or more, more preferably 4% by mass or more, and still more preferably 5% by mass or more; and the upper limit is preferably 70% by mass or less, more preferably 50% by mass or less, and still more preferably 40% by mass or less.
With regard to the content of the structural unit (C), the lower limit is preferably 0.5% by mass or more, more preferably 1% by mass or more, and still more preferably 5% by mass or more; and the upper limit is preferably 90% by mass or less, more preferably 70% by mass or less, and still more preferably 65% by mass or less.

In addition to the structural units (A), (B), and (C), the acrylic copolymer may further contain other structural units (i.e., the acrylic copolymer may be copolymerized with other monomers). Examples of other structural units (monomers) include (meth)acrylic acid esters such as methyl(meth)acrylate, ethyl (meth)acrylate, propyl(meth)acrylate, isopropyl(meth)acrylate, n-butyl (meth)acrylate, isobutyl(meth)acrylate, n-amyl(meth)acrylate, isoamyl (meth)acrylate, n-hexyl(meth)acrylate, 2-ethylhexyl(meth)acrylate, and lauryl (meth)acrylate(dodecyl(meth)acrylate), (meth)acrylic acid amides, and reactive surfactants. These other structural units may be used alone or as a mixture of two or more.

In the present invention, an aqueous emulsion in which the binder is dispersed in water is preferably used as the binder to prepare the cathode material. The content (solid concentration) of the binder in the emulsion is, for example, preferably about 0.2 to 80% by mass, more preferably about 0.5 to 70% by mass, and still more preferably about 0.5 to 60% by mass, although not particularly limited thereto.

Examples of methods for obtaining the aqueous emulsion of the binder include, although not particularly limited to, common emulsion polymerization, soap-free emulsion polymerization, seed polymerization, and a method in which polymerization is performed after swelling seed particles with monomers and the like. Specifically, in a closed container equipped with a stirrer and a heating device, a composition containing monomers as structural units of the binder, an emulsifier, a polymerization initiator, and water, as well as optionally a dispersing agent, a chain transfer agent, a pH adjuster, and the like is stirred at room temperature in an inert gas atmosphere to emulsify the monomers and the like in water. Emulsification may be performed by means of stirring, shearing, ultrasonic waves, or the like, with stirring blades, a homogenizer, or the like. Subsequently, the temperature is elevated while stirring the composition to initiate polymerization. As a result, a latex of a spherical polymer (aqueous emulsion of the binder) in which the binder (copolymer of the monomers) is dispersed in water can be obtained. Examples of methods for adding the monomers during polymerization include a method in which the monomers are added all at a time, a monomer dropping method, and a pre-emulsion dropping method. These methods may be used in combination of two or more.

The particle structure of the aqueous emulsion of the binder is not particularly limited. For example, a latex of a polymer containing composite polymer particles of a core-shell structure prepared by seed polymerization may be used. As a method of seed polymerization, a method described in "*Bunsan*/*nyuka-kei-no-kagaku*" ("Chemistry of dispersion/emulsion systems") (published by Kougakutosho Co., Ltd.), for example, may be used. This method specifically involves adding monomers, a polymerization initiator, and an emulsifier to a system in which seed particles prepared using the above-described method are dispersed, thereby growing nuclear particles. The above-described method may be repeated more than once.

As the seed for seed polymerization, particles containing a binder (copolymer) suitably used in the present invention or a known polymer may be used. Examples of known polymers include, although not limited to, polyethylene, polypropylene, polyvinyl alcohol, polystyrene, poly(meth)acrylates, and polyethers. Other known polymers may also be used. Alternatively, a homopolymer of one monomer, a copolymer of two or more monomers, or a blend thereof may be used.

Examples of shapes of the particles include a spherical shape, as well as a flat shape, a hollow structure, a composite structure, a localized structure, a *daruma*-shaped (potbellied) structure, an *idako*-shaped (octopus-shaped) structure, and a raspberry-shaped structure. Particles having two or more structures and compositions may be used without departing from the scope of the present invention.

The emulsifier is not particularly limited; for example, nonionic and anionic emulsifiers commonly used for emulsion polymerization may be used. Examples of nonionic emulsifiers include polyoxyethylene alkyl ethers, polyoxyethylene alcohol ethers, polyoxyethylene alkyl phenyl ethers, polyoxyethylene polycyclic phenyl ethers, polyoxyalkylene alkyl ethers, sorbitan fatty acid esters, polyoxyethylene fatty acid esters, and polyoxyethylene sorbitan fatty acid esters. Examples of anionic emulsifiers include alkyl benzene sulfonates, alkyl sulfates, polyoxyethylene alkyl ether sulfates, and fatty acid salts. These emulsifiers may be used alone or in combination of two or more. Representative examples of anionic emulsifiers include sodium dodecyl sulfate, sodium dodecylbenzenesulfonate, and triethanolamine lauryl sulfate.

The amount of the emulsifier to be used may be an amount commonly used in emulsion polymerization. Specifically, the amount of the emulsifier is 0.01 to 10% by mass, preferably 0.05 to 5% by mass, and more preferably 0.05 to 3% by mass, based on the amount of the monomers to be added. When a reactive surfactant is used as a monomer component, an emulsifier need not be added.

The polymerization initiator is not particularly limited, and polymerization initiators commonly used in emulsion polymerization may be used. Specific examples of such polymerization initiators include water-soluble polymerization initiators represented by persulfates such as potassium persulfate, sodium persulfate, and ammonium persulfate; oil-soluble polymerization initiators represented by cumene hydroperoxide and diisopropylbenzene hydroperoxide; hydroperoxides; azo initiators such as 4-4'-azobis(4-cyanovaleric acid), 2-2'-azobis[2-(2-imidazolin-2-yl)propane, 2-2'-azobis(propane-2-carboamidine), 2-2'-azobis[N-(2-carboxyethyl)-2-methylpropanamide, 2-2'-azobis[2-[1-(2-hydroxyethyl)-2-imidazolin-2-yl]propane], 2-2'-azobis(1-imino-1-pyrrolidino-2-methylpropane), and 2-2'-azobis[2-methyl-N-[1,1-bis(hydroxymethyl)-2-hydroxyethyl]propanamide]; and redox initiators. These polymerization initiators may be used alone or in combination of two or more.

The amount of the polymerization initiator to be used may be an amount commonly used in emulsion polymerization. Specifically, the amount of the polymerization initiator is, for example, about 0.01 to 5 parts by mass, preferably about 0.05 to 3 parts by mass, and more preferably about 0.1 to 1 part by mass, per 100 parts by mass of the monomers to be added.

The water to be used to prepare the aqueous emulsion is not particularly limited, and commonly used water may be used. Specific examples of such water include tap water, distilled water, ion-exchange water, and ultrapure water. Among the above, distilled water, ion-exchange water, and ultrapure water are preferred.

The cathode material of the present invention further comprises a water-soluble antioxidant in addition to the cathode active material and the binder described above. As used herein, the "water-soluble antioxidant" refers to an antioxidant having a solubility of 5 g or more per 100 g of water at ambient temperature (25°C). In the present invention, preferred examples of the water-soluble antioxidant specifically include ascorbic acid and/or salts thereof, erythorbic acid and/or salts thereof, green tea polyphenols, glutathione, lipoic acid, tea extract, and rosemary extract. Examples of salts of ascorbic acid include sodium ascorbate, potassium ascorbate, calcium ascorbate, and ascorbic acid 2-glucoside. Examples of salts of erythorbic acid include sodium erythorbate. Among the above, preferred as the water-soluble antioxidant are ascorbic acid, sodium ascorbate, potassium ascorbate, calcium ascorbate, ascorbic acid 2-glucoside, erythorbic acid, and sodium erythorbate; and more preferred are ascorbic acid, sodium ascorbate, and erythorbic acid. These water-soluble antioxidants may be used alone or in combination of two or more.

Preferably, the cathode material of the present invention is substantially free of a liposoluble antioxidant. As used herein, the "liposoluble antioxidant" refers to an antioxidant having a solubility less than 5 g per 100 g of water at ambient temperature (25°C). Examples of liposoluble antioxidants include 3,5-di-tert-butyl-4-hydroxytoluene and butylated hydroxyanisole. Such a liposoluble antioxidant is dissolved or diffused in an electrolytic solution, such that the concentration of the antioxidant is markedly reduced near the cathode. As a result, an anti-oxidizing effect is not observed. Moreover, the presence of a liposoluble antioxidant may hinder the effect of reducing the internal resistance and the effect of improving the charge-discharge cycle characteristics to be achieved by the water-soluble antioxidant. The content of a liposoluble antioxidant is, for example, preferably 0.1% by mass or less, and more preferably 0.05% by mass or less.

The content of the water-soluble antioxidant in the cathode material of the present invention is not particularly limited; in order to allow the water-soluble antioxidant to favorably achieve the effect of reducing the internal resistance and the effect of improving the charge-discharge cycle characteristics, the cathode material of the present invention preferably contains the water-soluble antioxidant in an amount of about 0.1 to 50 parts by mass, and more preferably about 0.5 to 30 parts by mass, per 100 parts by mass of the binder.

The cathode material may further contain a conductive additive, as required. The conductive additive is not particularly limited, and a known conductive additive used for a cathode of a nonaqueous electrolyte secondary battery may be used. Specific examples of such conductive additives include conductive carbon blacks such as acetylene black, ketjen black, carbon fibers, and graphite, conductive polymers, and metal powders. Among the above, a conductive carbon black is particularly preferred.

When a conductive additive is used, the amount of the conductive additive is, for example, preferably 20 parts by mass or less, and more preferably 15 parts by mass or less, per 100 parts by mass of the cathode active material, although not particularly limited thereto. When a conductive additive is contained in the cathode material, the lower limit for the amount of the conductive additive is typically 0.05 part by mass or more, 0.1 part by mass or more, 0.2 part by mass or more, 0.5 part by mass or more, or 2 parts by mass or more, for example.

The cathode material may further contain a thickener, as required. The thickener is not particularly limited, and a known thickener used for a cathode of a nonaqueous electrolyte secondary battery may be used. Examples of thickeners include carboxymethyl cellulose, methyl cellulose, hydroxymethylcellulose, and the like, as well as alkali metal salts or ammonium salts thereof, polyvinyl alcohol, and polyacrylates.

When a thickener is used, the amount of the thickener contained in the cathode material is, for example, preferably 5 parts by mass or less, and more preferably 3 parts by mass or less, per 100 parts by mass of the cathode active material, although not particularly limited thereto. When a thickener is contained in the cathode material, the lower limit for the amount of the thickener is typically 0.05 part by mass or more, 0.1 part by mass or more, 0.2 part by mass or more, 0.5 part by mass or more, or 1 part by mass or more, for example.

### 2. Cathode

The cathode of the present invention comprises the cathode material of the present invention described in the "1. Cathode Material" section above and a cathode current collector. Details of the cathode material of the present invention are as described above.

The cathode current collector is not particularly limited, and a known cathode current collector used for a cathode of a nonaqueous electrolyte secondary battery may be used. The cathode current collector may be formed of a substrate of a metal such as, for example, aluminum, nickel, stainless steel, gold, platinum, or titanium.

The cathode of the present invention may be suitably produced using, for example, a method comprising the step of applying the above-described cathode material of the present invention to a surface of the cathode current collector. Specific examples of the method for producing the cathode of the present invention include a method that involves applying a paste of the cathode material of the present invention to a surface of the cathode current collector, followed by drying. The cathode of the present invention may also be obtained by applying a paste containing materials of the cathode material of the present invention other than the water-soluble antioxidant to a surface of the cathode current collector, and then applying an aqueous solution containing the water-soluble antioxidant over the paste, followed by drying.

In particular, when an aqueous binder is used as the binder, if a paste in which the water-soluble antioxidant is dissolved in an aqueous solution of the binder is prepared and then applied to a surface of the cathode current collector, the water-soluble antioxidant can be homogeneously dispersed in the cathode material. This allows the water-soluble antioxidant to favorably achieve the effect of reducing the internal resistance and the effect of improving the charge-discharge cycle characteristics. The water-soluble antioxidant may be added during the production of the aqueous binder. Alternatively, the water-soluble antioxidant may be dissolved in an emulsion of the aqueous binder produced.

Examples of secondary effects achieved by dissolving the water-soluble antioxidant in an emulsion of the aqueous binder include the effect of effectively inhibiting changes with time such as an increase in the viscosity of the emulsion of the binder.

### 3. Nonaqueous Electrolyte Secondary Battery

The nonaqueous electrolyte secondary battery of the present invention comprises the cathode of the present invention described in the "2. Cathode" section above, an anode, and an organic electrolytic solution. That is, the cathode used in the nonaqueous electrolyte secondary battery of the present invention contains the cathode material of the present invention. Details of the cathode of the present invention are as described above.

The anode comprises an anode material and an anode current collector. The anode material contains an anode active material and a binder. The anode active material is not particularly limited, and a known anode active material used for an anode of a nonaqueous electrolyte secondary battery may be used. Examples of the anode active material include powders composed of carbon materials (such as natural graphite, artificial graphite, and amorphous carbon) having a structure (porous structure) capable of intercalation and de-intercalation of alkali metal ions such as lithium ions; and metals such as lithium, an aluminum-based compound, a tin-based compound, and a silicon-based compound that are capable of intercalation and de-intercalation of alkali metal ions such as lithium ions. The particle diameter of the anode active material is, for example, preferably 10 nm or more and 100 µm or less, and more preferably 20 nm or more and 20 µm or less. A mixture of a metal and a carbon material may also be used as the anode active material. The anode active material preferably has a porosity of about 70%.

The binder of the anode is not particularly limited, and a known binder used for an anode of a nonaqueous electrolyte secondary battery may be used. Specific examples of the binder of the anode include the same binders as those mentioned above for the binder of the cathode.

The anode current collector is not particularly limited, and a known anode current collector used for an anode of a nonaqueous electrolyte secondary battery may be used. The anode current collector may be formed of a substrate of a metal such as, for example, copper, nickel, stainless steel, gold, platinum, or titanium.

The organic electrolytic solution is not particularly limited, and a known organic electrolytic solution used for an anode of a nonaqueous electrolyte secondary battery may be used. Specific examples of such organic electrolytic solutions include a solution containing a lithium salt compound as an electrolyte and an aprotic organic solvent as a solvent, for example. A single electrolyte or a combination of two or more electrolytes may be used as the electrolyte. Likewise, a single solvent or a combination of two or more solvents may be used as the solvent.

As the lithium salt compound, a lithium salt compound having a wide potential window, such as one commonly used in a lithium-ion battery, is used. Examples of such lithium salt compounds include, although not limited to, LiBF₄, LiPF₆, LiClO₄, LiCF₃SO₃, LiN(CF₃SO₂)₂, LiN(C₂F₅SO₂)₂, and LiN[CF₃SC(C₂F₅SO₂)₃]₂.

Examples of usable aprotic organic solvents include propylene carbonate, ethylene carbonate, dimethyl carbonate, diethyl carbonate, methylethyl carbonate, 1,2-dimethoxyethane, 1,2-diethoxyethane, γ-butyrolactone, tetrahydrofuran, 1,3-dioxolane, dipropyl carbonate, diethyl ether, sulfolane, methylsulfolane, acetonitrile, propylnitrile, anisole, acetates, propionates, and linear ethers such as diethylether. These aprotic organic solvents may be used as a mixture of two or more.

Moreover, an ambient temperature molten salt may be used as the solvent. The "ambient temperature molten salt" refers to a salt that is at least partially liquid at ambient temperature, wherein the "ambient temperature" refers to the range of temperatures where a battery is generally assumed to operate. The range of temperatures where a battery is generally assumed to operate is in the range where the upper limit is about 120°C, potentially about 80°C, and the lower limit is about -40°C, potentially about -20°C.

Ambient temperature molten salts are also referred to as ionic liquids. An ambient temperature molten salt is a "salt" composed of ions (an anion and a cation) only. In particular, an ambient temperature molten salt composed of a liquid compound is referred to as an ionic liquid.

As cationic species of ambient temperature molten salts, pyridine-based, aliphatic amine-based, or alicyclic amine-based organic quaternary ammonium cations are known. Examples of such organic quaternary ammonium cations include imidazolium ions such as dialkylimidazolium ions and trialkylimidazolium ions, tetraalkylammonium ions, alkylpyridinium ions, pyrazolium ion, pyrrolidinium ion, and piperidinium ion. In particular, imidazolium ions are preferred.

Examples of tetraalkylammonium ions include, although not limited to, trimethylethylammonium ion, trimethylethylammonium ion, trimethylpropylammonium ion, trimethylhexylammonium ion, tetrapentylammonium ion, and triethylmethylammonium ion.

Examples of alkylpyridinium ions include, although not limited to, N-methylpyridinium ion, N-ethylpyridinium ion, N-propylpyridinium ion, N-butylpyridinium ion, 1-ethyl-2-methylpyridinium ion, 1-butyl-4-methylpyridinium ion, and 1-butyl-2,4-dimethylpyridinium ion.

Examples of imidazolium ions include, although not limited to, 1,3-dimethylimidazolium ion, 1-ethyl-3-methylimidazolium ion, 1-methyl-3-ethylimidazolium ion, 1-methyl-3-butylimidazolium ion, 1-butyl-3-methylimidazolium ion, 1,2,3-trimethylimidazolium ion, 1,2-dimethyl-3-ethylimidazolium ion, 1,2-dimethyl-3-propylimidazolium ion, and 1-butyl-2,3-dimethylimidazolium ion.

Examples of anionic species of ambient temperature molten salts include inorganic acid ions, for example, halide ions such as chloride ion, bromide ion, and iodide ion, perchlorate ion, thiocyanate ion, tetrafluoroborate ion, nitrate ion, AsF₆⁻, and PF₆⁻; and organic acid ions such as stearylsulfonate ion, octylsulfonate ion, dodecylbenzenesulfonate ion, naphthalenesulfonate ion, dodecylnaphthalenesulfonate ion, and 7,7,8,8-tetracyano-p-quinodimethane ion.

These ambient temperature molten salts may be used alone or in combination of two or more.

Various additives may be used, as required, in the organic electrolytic solution. Examples of such additives include flame retardants, nonflammable agents, cathode surface treatment agents, anode surface treatment agents, and overcharge inhibitors. Examples of flame retardants and nonflammable agents include halides such as brominated epoxy compounds, phosphazene compounds, tetrabromobisphenol A, and chlorinated paraffins, antimony trioxide, antimony pentaoxide, aluminum hydroxide, magnesium hydroxide, phosphates, polyphosphates, and zinc borate. Examples of cathode surface treatment agents include inorganic compounds such as carbon and metal oxides (such as MgO and ZrO₂) and organic compounds such as ortho-terphenyl. Examples of anode surface treatment agents include vinylene carbonate, fluoroethylene carbonate, and polyethylene glycol dimethyl ether. Examples of overcharge inhibitors include biphenyl and 1-(p-tolyl)-adamantane.

In the production of the nonaqueous electrolyte secondary battery of the present invention, the cathode containing the water-soluble antioxidant is preferably heat-treated before being integrated into the battery. The heat treatment is preferably performed before the application of a potential. While the method of heat treatment is not particularly limited, the heat treatment is preferably performed in an inert gas atmosphere such as nitrogen or argon, with the surface of the cathode being exposed. The temperature of the heat treatment is preferably 50°C or higher and 150°C or lower. Within this range of temperatures, the heat treatment can be performed without requiring a long time, and without accelerating the oxidative decomposition of organic materials. While the time of the heat treatment varies with temperature, it is typically within 7 days, for example, 1 to 48 hours.

The method for producing the nonaqueous electrolyte secondary battery of the present invention is not particularly limited; the nonaqueous electrolyte secondary battery of the present invention may be produced in accordance with a known method, using the cathode, the anode, the organic electrolytic solution, a separator, and the like. In the case of a coin-shaped battery, for example, the cathode, the separator, and the anode are inserted into an external can. The external can is then filled with the electrolytic solution to impregnate the components with the electrolytic solution. Then, the external can is joined to a sealing body by means of tab welding, for example, to encapsulate the sealing body, and then crimped. As a result, a storage battery is obtained. Examples of shapes of the battery include, although not limited to, a coin shape, a cylindrical shape, and a sheet shape. The battery may also have a structure in which two or more batteries are stacked.

The separator serves to prevent short circuits in the storage battery due to direct contact between the cathode and the anode. A known material may be used as the separator. Specific examples of the separator include porous polymer films such as polyolefins, and paper. Preferred porous polymer films include films of polyethylene, polypropylene, and the like, which are unlikely to be affected by the organic electrolytic solution.

For evaluation of characteristics of the cathode material only, metal lithium foil may be used as a counter electrode to evaluate the reversibility of the cathode material. For evaluation of a combination of the cathode material and the anode material, a combination of the cathode material and a carbon-based anode material may be used instead of metal lithium foil.

The nonaqueous electrolyte secondary battery of the present invention has low internal resistance and excellent charge-discharge cycle characteristics. The nonaqueous electrolyte secondary battery of the present invention can be suitably used as secondary batteries including small batteries for electronic apparatuses such as mobile phones, laptop computers, and camcorders, as well as large batteries such as storage batteries for use in electric vehicles, hybrid electric vehicles, and other vehicles, or for storing household electric power.

### Examples

The present invention will be hereinafter described in detail with examples and comparative examples, although the present invention is not limited to the examples.

In the following examples and comparative examples, respective electrodes and coin batteries were produced. For evaluation of the performance of each coin battery, measurement of the internal resistance and a charge-discharge cycle characteristic test were performed using the following experimental methods. The results for each item are shown in Table 1.

### <Measurement of Internal Resistance>

A prepared coin battery (lithium-ion secondary battery) was charged to 4.2 V, using a constant current-constant voltage charging method. The end-of-charge current was equivalent to 2 C. After charging, the battery was stopped for 10 minutes. Next, the battery was discharged at a constant current, and then the internal resistance, R (Ω) = ΔE/I, of the coin battery was measured based on the current value I (mA) and the voltage drop ΔE (mV) after 10 seconds.

### <Charge-Discharge Cycle Characteristics (Capacity Retention Ratio)>

The charge-discharge cycle characteristics of a cathode were evaluated as follows. Using a charge/discharge apparatus from Toyo System Co., Ltd., a constant current was passed through the battery at an upper limit of 4.2 V and a lower limit of 2.5 V, under test conditions (C/8) to allow predetermined charging and discharging to be performed in 8 hours from the 1st to 3rd cycles, and then under 1 C at the 4th cycle and thereafter. The test temperature was set to 25°C. The capacity retention ratio was evaluated as the ratio of the capacity after 100 charge/discharge cycles to the capacity at the 4th cycle.

### [Synthesis Example 1: Synthesis of Binder A]

A 500-ml reaction vessel with a stirrer was charged with 19 parts by mass of polypropylene glycol monoacrylate (BLEMMER AP-400; NOF Corporation), 58.5 parts by mass of methyl methacrylate, 4 parts by mass of methacrylic acid, 1.5 parts by mass of acrylic acid, 17 parts by mass of trimethylolpropane triacrylate (A-TMPT; Shin Nakamura Chemical Co., Ltd), 8 parts by mass, calculated as solids, of an aqueous solution of ammonium polyoxyalkylene alkenyl ether sulfate (PD-104; Kao Corporation) as a reactive emulsifier, 150 parts by mass of ion-exchange water, and 0.1 part by mass of ammonium persulfate as a polymerization initiator. The components were sufficiently emulsified with a homogenizer, and then heated to 60°C in a nitrogen atmosphere to conduct polymerization for 5 hours. The resulting product was then cooled. After cooling, the polymerization liquid was adjusted to a pH of 8.2 with a 28% aqueous solution of ammonia to produce a binder A (polymerization conversion: 99% or more) (solid concentration: 40% by mass). The resulting polymer had an average particle diameter of 0.213 µm.

### [Synthesis Example 2: Synthesis of Binder B]

A 500-ml reaction vessel with a stirrer was charged with 4.5 parts by mass of polyethylene glycol monomethacrylate (BLEMMER PE-90; NOF Corporation), 70 parts by mass of methyl methacrylate, 5 parts by mass of methacrylic acid, 1.5 parts by mass of acrylic acid, 20 parts by mass of trimethylolpropane triacrylate (A-TMPT; Shin Nakamura Chemical Co., Ltd), 1 part by mass of sodium lauryl sulfate (EMAL 10G; Kao Corporation) as an emulsifier, 0.1 part by mass of sodium L-ascorbate, 150 parts by mass of ion-exchange water, and 0.1 part by mass of ammonium persulfate as a polymerization initiator. The components were sufficiently emulsified with a homogenizer, and then heated to 60°C in a nitrogen atmosphere to conduct polymerization for 5 hours. The resulting product was then cooled. After cooling, the polymerization liquid was adjusted to a pH of 8.2 with a 28% aqueous solution of ammonia to produce a binder B (polymerization conversion: 99% or more) (solid concentration: 39% by mass). The resulting polymer had an average particle diameter of 0.198 µm.

### [Synthesis Example 3: Synthesis of Binder C]

A 500-ml reaction vessel with a stirrer was charged with 20 parts by mass of polyethylene glycol monomethacrylate (BLEMMER AE-200; NOF Corporation), 57 parts by mass of methyl methacrylate, 4.5 parts by mass of methacrylic acid, 1.5 parts by mass of acrylic acid, 17 parts by mass of trimethylolpropane triacrylate (A-TMPT; Shin Nakamura Chemical Co., Ltd), 3 parts by mass, calculated as solids, of an aqueous solution of ammonium polyoxyalkylene alkenyl ether sulfate (PD-104; Kao Corporation) as a reactive emulsifier, 3 parts by mass of L-ascorbic acid, 150 parts by mass of ion-exchange water, and 0.1 part by mass of ammonium persulfate as a polymerization initiator. The components were sufficiently emulsified with a homogenizer, and then heated to 60°C in a nitrogen atmosphere to conduct polymerization for 5 hours. The resulting product was then cooled. After cooling, the polymerization liquid was adjusted to a pH of 8.2 with a 28% aqueous solution of ammonia to produce a binder C (polymerization conversion: 99% or more) (solid concentration: 40% by mass). The resulting polymer had an average particle diameter of 0.215 µm. The binder C had a viscosity of 26 mPa·s. After storage for 2 weeks at an ambient temperature of 25°C, no increase in viscosity was observed. The viscosity was measured at 25°C with an E-type viscometer (EKO Instruments, Co., Ltd.) at 10 rpm.

### [Example 1]

### <Production Example 1 of Cathode>

Lithium nickel manganese cobalt oxide (ternary system) with an average particle diameter of 10 µm was used as a cathode active material. To 94 parts by mass of the cathode active material were added 4 parts by mass of acetylene black as a conductive additive, 1 part by mass, calculated as solids, of the binder A obtained in Synthesis Example 1 as a binder, 0.05 part by mass of L-ascorbic acid, and 1 part by mass of carboxymethyl cellulose. Additionally, water was added as a solvent to adjust the solid content of the slurry to 55% by mass. The components were sufficiently kneaded with a planetary mill to produce a slurry composition 1 for a cathode (cathode material). The resulting slurry composition 1 for a cathode was applied onto a 20-µm-thick aluminum current collector using a bar coater with a gap of 100 µm. The slurry composition was dried under vacuum at 110°C for 12 hours or longer, and then pressed with a roller press machine. The slurry composition was further heated-treated at 120°C for 12 hours in an argon gas atmosphere to produce a cathode sheet 1 with a thickness of 30 µm.

### <Production Example 1 of Coin Battery>

In a glove box purged with argon gas, a laminate prepared by bonding the cathode obtained in Production Example 1 of Cathode, two porous films of polypropylene/polyethylene/polypropylene with a thickness of 18 µm as separators, and metal lithium foil with a thickness of 300 µm as a counter electrode was placed in a coin cell. The laminate was then sufficiently impregnated with a 1 mol/L solution of lithium hexafluorophosphate in ethylene carbonate and dimethyl carbonate (volume ratio: 1:1) as an electrolytic solution. Then, the coin cell was closed with a cover and crimped to produce a 2032-type test coin battery. Table 1 shows the result of measurement of internal resistance and the result of evaluation of capacity retention ratio after 100 cycles in the section of Example 1.

### [Example 2]

### <Production Example 2 of Cathode>

Lithium nickel manganese cobalt oxide (ternary system) with an average particle diameter of 10 µm was used as a cathode active material. To 94 parts by mass of the cathode active material were added 4 parts by mass of acetylene black as a conductive additive, 1 part by mass, calculated as solids, of the binder A obtained in Synthesis Example 1 as a binder, 0.1 part by mass of L-ascorbic acid, and 1 part by mass of carboxymethyl cellulose. Additionally, water was added as a solvent to adjust the solid content of the slurry to 55% by mass. The components were sufficiently kneaded with a planetary mill to produce a slurry composition 2 for a cathode (cathode material). The resulting slurry composition 2 for a cathode was applied onto a 20-µm-thick aluminum current collector using a bar coater with a gap of 100 µm. The slurry composition was dried under vacuum at 110°C for 12 hours or longer, and then pressed with a roller press machine. The slurry composition was further heated-treated at 120°C for 12 hours in an argon gas atmosphere to produce a cathode sheet 2 with a thickness of 30 µm.

### <Production Example 2 of Coin Battery>

In a glove box purged with argon gas, a laminate prepared by bonding the cathode obtained in Production Example 2 of Cathode, two porous films of polypropylene/polyethylene/polypropylene with a thickness of 18 µm as separators, and metal lithium foil with a thickness of 300 µm as a counter electrode was placed in a coin cell. The laminate was then sufficiently impregnated with a 1 mol/L solution of lithium hexafluorophosphate in ethylene carbonate and dimethyl carbonate (volume ratio: 1:1) as an electrolytic solution. Then, the coin cell was closed with a cover and crimped to produce a 2032-type test coin battery. Table 1 shows the result of measurement of internal resistance and the result of evaluation of capacity retention ratio after 100 cycles in the section of Example 2.

### [Example 3]

### <Production Example 3 of Cathode>

Lithium nickel manganese cobalt oxide (ternary system) with an average particle diameter of 10 µm was used as a cathode active material. To 94 parts by mass of the cathode active material were added 4 parts by mass of acetylene black as a conductive additive, 1 part by mass, calculated as solids, of the binder A obtained in Synthesis Example 1 as a binder, 0.2 part by mass of L-ascorbic acid, and 1 part by mass of carboxymethyl cellulose. Additionally, water was added as a solvent to adjust the solid content of the slurry to 55% by mass. The components were sufficiently kneaded with a planetary mill to produce a slurry composition 3 for a cathode (cathode material). The resulting slurry composition 3 for a cathode was applied onto a 20-µm-thick aluminum current collector using a bar coater with a gap of 100 µm. The slurry composition was dried under vacuum at 110°C for 12 hours or longer, and then pressed with a roller press machine. The slurry composition was further heated-treated at 120°C for 12 hours in an argon gas atmosphere to produce a cathode sheet 3 with a thickness of 30 µm.

### <Production Example 3 of Coin Battery>

In a glove box purged with argon gas, a laminate prepared by bonding the cathode obtained in Production Example 3 of Cathode, two porous films of polypropylene/polyethylene/polypropylene with a thickness of 18 µm as separators, and metal lithium foil with a thickness of 300 µm as a counter electrode was placed in a coin cell. The laminate was then sufficiently impregnated with a 1 mol/L solution of lithium hexafluorophosphate in ethylene carbonate and dimethyl carbonate (volume ratio: 1:1) as an electrolytic solution. Then, the coin cell was closed with a cover and crimped to produce a 2032-type test coin battery. Table 1 shows the result of measurement of internal resistance and the result of evaluation of capacity retention ratio after 100 cycles in the section of Example 3.

### [Example 4]

### <Production Example 4 of Cathode>

Lithium nickel manganese cobalt oxide (ternary system) with an average particle diameter of 10 µm was used as a cathode active material. To 93 parts by mass of the cathode active material were added 4 parts by mass of acetylene black as a conductive additive, 2 parts by mass, calculated as solids, of the binder B obtained in Synthesis Example 2 as a binder, 0.2 part by mass of sodium L-ascorbate, and 1 part by mass of carboxymethyl cellulose. Additionally, water was added as a solvent to adjust the solid content of the slurry to 55% by mass. The components were sufficiently kneaded with a planetary mill to produce a slurry composition 4 for a cathode (cathode material). The resulting slurry composition 4 for a cathode was applied onto a 20-µm-thick aluminum current collector using a bar coater with a gap of 100 µm. The slurry composition was dried under vacuum at 110°C for 12 hours or longer, and then pressed with a roller press machine. The slurry composition was further heated-treated at 120°C for 12 hours in an argon gas atmosphere to produce a cathode sheet 4 with a thickness of 30 µm.

### <Production Example 4 of Coin Battery>

In a glove box purged with argon gas, a laminate prepared by bonding the cathode obtained in Production Example 4 of Cathode, two porous films of polypropylene/polyethylene/polypropylene with a thickness of 18 µm as separators, and metal lithium foil with a thickness of 300 µm as a counter electrode was placed in a coin cell. The laminate was then sufficiently impregnated with a 1 mol/L solution of lithium hexafluorophosphate in ethylene carbonate and dimethyl carbonate (volume ratio: 1:1) as an electrolytic solution. Then, the coin cell was closed with a cover and crimped to produce a 2032-type test coin battery. Table 1 shows the result of measurement of internal resistance and the result of evaluation of capacity retention ratio after 100 cycles in the section of Example 4.

### [Example 5]

### <Production Example 5 of Cathode>

Lithium nickel manganese cobalt oxide (ternary system) with an average particle diameter of 10 µm was used as a cathode active material. To 93 parts by mass of the cathode active material were added 4 parts by mass of acetylene black as a conductive additive, 3 parts by mass, calculated as solids, of the binder C obtained in Synthesis Example 3 as a binder, and 0.3 part by mass of erythorbic acid. Additionally, water was added as a solvent to adjust the solid content of the slurry to 55% by mass. The components were sufficiently kneaded with a planetary mill to produce a slurry composition 5 for a cathode (cathode material). The resulting slurry composition 5 for a cathode was applied onto a 20-µm-thick aluminum current collector using a bar coater with a gap of 100 µm. The slurry composition was dried under vacuum at 110°C for 12 hours or longer, and then pressed with a roller press machine. The slurry composition was further heated-treated at 120°C for 12 hours in an argon gas atmosphere to produce a cathode sheet 5 with a thickness of 30 µm.

### <Production Example 5 of Coin Battery>

In a glove box purged with argon gas, a laminate prepared by bonding the cathode obtained in Production Example 5 of Cathode, two porous films of polypropylene/polyethylene/polypropylene with a thickness of 18 µm as separators, and metal lithium foil with a thickness of 300 µm as a counter electrode was placed in a coin cell. The laminate was then sufficiently impregnated with a 1 mol/L solution of lithium hexafluorophosphate in ethylene carbonate and dimethyl carbonate (volume ratio: 1:1) as an electrolytic solution. Then, the coin cell was closed with a cover and crimped to produce a 2032-type test coin battery. Table 1 shows the result of measurement of internal resistance and the result of evaluation of capacity retention ratio after 100 cycles in the section of Example 5.

### [Comparative Example 1]

### <Comparative Production Example 1 of Cathode>

Lithium nickel manganese cobalt oxide (ternary system) with an average particle diameter of 10 µm was used as a cathode active material. To 94 parts by mass of the cathode active material were added 4 parts by mass of acetylene black as a conductive additive, 1 part by mass, calculated as solids, of the binder A obtained in Synthesis Example 1 as a binder, and 1 part by mass of carboxymethyl cellulose. Additionally, water was added as a solvent to adjust the solid content of the slurry to 55% by mass. The components were sufficiently kneaded with a planetary mill to produce a slurry composition 6 for a cathode (cathode material). The resulting slurry composition for a cathode was applied onto a 20-µm-thick aluminum current collector using a bar coater with a gap of 100 µm. The slurry composition was dried under vacuum at 110°C for 12 hours or longer, and then pressed with a roller press machine. The slurry composition was further heated-treated at 120°C for 12 hours in an argon gas atmosphere to produce a cathode sheet 6 with a thickness of 30 µm.

### <Comparative Production Example 1 of Coin Battery>

In a glove box purged with argon gas, a laminate prepared by bonding the cathode obtained in Comparative Production Example 1 of Cathode, two porous films of polypropylene/polyethylene/polypropylene with a thickness of 18 µm as separators, and metal lithium foil with a thickness of 300 µm as a counter electrode was placed in a coin cell. The laminate was then sufficiently impregnated with a 1 mol/L solution of lithium hexafluorophosphate in ethylene carbonate and dimethyl carbonate (volume ratio: 1:1) as an electrolytic solution. Then, the coin cell was closed with a cover and crimped to produce a 2032-type test coin battery. Table 1 shows the result of measurement of internal resistance and the result of evaluation of capacity retention ratio after 100 cycles in the section of Comparative Example 1.

### [Comparative Example 2]

### <Comparative Production Example 2 of Cathode>

Lithium nickel manganese cobalt oxide (ternary system) with an average particle diameter of 10 µm was used as a cathode active material. To 93 parts by mass of the cathode active material were added 4 parts by mass of acetylene black as a conductive additive, 1 part by mass, calculated as solids, of the binder A obtained in Synthesis Example 1 as a binder, 0.1 part by mass of 3,5-di-tert-butyl-4-hydroxytoluene, and 1 part by mass of carboxymethyl cellulose. Additionally, water was added as a solvent to adjust the solid content of the slurry to 55% by mass. The components were sufficiently kneaded with a planetary mill to produce a slurry composition 7 for a cathode (cathode material). The resulting slurry composition 7 for a cathode was applied onto a 20-µm-thick aluminum current collector using a bar coater with a gap of 100 µm. The slurry composition was dried under vacuum at 110°C for 12 hours or longer, and then pressed with a roller press machine. The slurry composition was further heated-treated at 120°C for 12 hours in an argon gas atmosphere to produce a cathode sheet 7 with a thickness of 30 µm.

### <Comparative Production Example 3 of Coin Battery>

In a glove box purged with argon gas, a laminate prepared by bonding the cathode obtained in Comparative Production Example 2 of Cathode, two porous films of polypropylene/polyethylene/polypropylene with a thickness of 18 µm as separators, and metal lithium foil with a thickness of 300 µm as a counter electrode was placed in a coin cell. The laminate was then sufficiently impregnated with a 1 mol/L solution of lithium hexafluorophosphate in ethylene carbonate and dimethyl carbonate (volume ratio: 1:1) as an electrolytic solution. Then, the coin cell was closed with a cover and crimped to produce a 2032-type test coin battery. Table 1 shows the result of measurement of internal resistance and the result of evaluation of capacity retention ratio after 100 cycles in the section of Comparative Example 2.

### [Comparative Example 3]

### <Comparative Production Example 3 of Cathode>

Lithium nickel manganese cobalt oxide (ternary system) with an average particle diameter of 10 µm was used as a cathode active material. To 94 parts by mass of the cathode active material were added 4 parts by mass of acetylene black as a conductive additive, 1 part by mass, calculated as solids, of the binder A obtained in Synthesis Example 1 as a binder, 0.3 part by mass of 3,5-di-tert-butyl-4-hydroxytoluene, and 1 part by mass of carboxymethyl cellulose. Additionally, water was added as a solvent to adjust the solid content of the slurry to 55% by mass. The components were sufficiently kneaded with a planetary mill to produce a slurry composition 8 for a cathode (cathode material). The resulting slurry composition 8 for a cathode was applied onto a 20-µm-thick aluminum current collector using a bar coater with a gap of 100 µm. The slurry composition was dried under vacuum at 110°C for 12 hours or longer, and then pressed with a roller press machine. The slurry composition was further heated-treated at 120°C for 12 hours in an argon gas atmosphere to produce a cathode sheet 8 with a thickness of 30 µm.

### <Comparative Production Example 3 of Coin Battery>

In a glove box purged with argon gas, a laminate prepared by bonding the cathode obtained in Comparative Production Example 3 of Cathode, two porous films of polypropylene/polyethylene/polypropylene with a thickness of 18 µm as separators, and metal lithium foil with a thickness of 300 µm as a counter electrode was placed in a coin cell. The laminate was then sufficiently impregnated with a 1 mol/L solution of lithium hexafluorophosphate in ethylene carbonate and dimethyl carbonate (volume ratio: 1:1) as an electrolytic solution. Then, the coin cell was closed with a cover and crimped to produce a 2032-type test coin battery. Table 1 shows the result of measurement of internal resistance and the result of evaluation of capacity retention ratio after 100 cycles in the section of Comparative Example 3.

Table 1 shows the results for the examples and comparative examples.

**Table 1**

| | Internal Resistance (Ω) | Capacity Retention Ratio after 100 Cycles (%) |
|---|---|---|
| Example 1 | 11.5 | 97 |
| Example 2 | 10.4 | 98 |
| Example 3 | 9.8 | 99 |
| Example 4 | 11.2 | 99 |
| Example 5 | 10.9 | 99 |
| Comparative Example 1 | 12.2 | 92 |
| Comparative Example 2 | 11.9 | 93 |
| Comparative Example 3 | 12.5 | 90 |

## Claims

1. A cathode material for a nonaqueous electrolyte secondary battery comprising a cathode active material, a binder, and a water-soluble antioxidant.

2. The cathode material according to claim 1, wherein the water-soluble antioxidant is at least one selected from the group consisting of ascorbic acid and/or salts thereof, erythorbic acid and/or salts thereof, green tea polyphenols, glutathione, lipoic acid, tea extract, and rosemary extract.

3. The cathode material according to claim 1 or 2, wherein the binder is an aqueous binder.

4. The cathode material according to any one of claims 1 to 3, wherein the water-soluble antioxidant is contained in an amount of 0.1 to 50 parts by mass, per 100 parts by mass of the binder.

5. The cathode material according to any one of claims 1 to 4, wherein the cathode active material comprises an alkali metal-containing composite oxide represented by any of the compositions:
AMO₂, wherein A represents an alkali metal, and M comprises a single transition metal or two or more transition metals, and optionally partially comprises a non-transition metal;
AM₂O₄, wherein A represents an alkali metal, and M comprises a single transition metal or two or more transition metals, and optionally partially comprises a non-transition metal;
A₂MO₃, wherein A represents an alkali metal, and M comprises a single transition metal or two or more transition metals, and optionally partially comprises a non-transition metal; and
AMBO₄, wherein A represents an alkali metal, B represents P, Si, or a mixture thereof, and M comprises a single transition metal or two or more transition metals, and optionally partially comprises a non-transition metal.

6. A cathode for a nonaqueous electrolyte secondary battery comprising the cathode material according to any one of claims 1 to 5 and a cathode current collector.

7. A method for producing a cathode for a nonaqueous electrolyte secondary battery comprising the step of applying the cathode material according to any one of claims 1 to 5 to a surface of a cathode current collector.

8. A nonaqueous electrolyte secondary battery comprising the cathode according to claim 6, an anode, and an organic electrolytic solution.
